# EUROPEAN PATENT SPECIFICATION

(11) **EP 3 766 795 B1**
(45) Date of publication and mention of the grant of the patent: **07.08.2024**
(21) Application number: 19768065.5
(22) Date of filing: 01.03.2019
(51) Int. Cl.: B65D 19/38, B65D 19/42, B62B 5/00, B65D 21/028, B62B 5/04

(54) **PALLET**
PALETTE
PALETTE

(30) Priority: 12.03.2018 CN 201810198601
(43) Date of publication of application: 20.01.2021
(73) Proprietor: Shanghai Hongyan Returnable Transit Packagings Co., Ltd., Shanghai 200233 (CN)
(72) Inventor: SU, Yongping, Xuhui District Shanghai 200233 (CN)
(74) Representative: Herrero & Asociados, S.L.
(86) International application number: PCT/CN2019/076708
(87) International publication number: WO 2019/174481

(56) References cited:
- EP-A2- 2 426 028
- CN-A- 108 455 016
- CN-U- 202 704 089
- CN-U- 207 917 424
- GB-A- 2 377 689
- US-A1- 2009 085 315
- US-A1- 2010 109 268
- US-A1- 2016 311 453
- US-A1- 2017 151 974

## Description

### Technical Field

The present invention relates to logistics tools, and in particular to a pallet.

### Background of the Invention

The general specification of the existing exhibited movable pallet is 800 × 600 × 190mm, 600 × 400 × 200mm, etc. The outer dimensions of this kind of movable pallets are relatively uniform in length and width. The pallets are mainly matched with containers which mostly are 600*400mm and used as carriers of the movable container, that is, the containers are placed on a movable pallet, as a solution for the handling and movement of single or unitized containers. However, during the movement and handling of similar movable pallet carriers, the movement of multiple groups of movable carrier units requires pallet units to be connected to each other, that is, the movable carriers can be connected to each other by the structures, so that the pallet carriers can be synchronously moved under the traction of one of them to reduce the waste of manpower for moving back and forth.

According to a published patent US20120267869A1, the connection of its pallets is too complicated. A connected pallet is required to be lifted and placed on the upper edge of the connecting pallet, and then the two connected pallets are partially overlapped and engaged. When the pallets are connected for using, especially after the goods are loaded on the upper surface of the pallet, the connected pallets cannot be disconnected from each other, that is, the interconnection can be released by the operation reverse to the way of assembly only after the goods are completely unloaded, resulting in inconvenient operation and poor experience, and reducing the turnover efficiency of the switching between the interconnection of the pallets and a single pallet carrier.

US 2010/109268 A relates to a multi-cart system for wheeled carts for engagement and disengagement of carts to form a train of multiple carts. Each cart comprises a hitch, a pocket and a lockpin with a knob at its external end.

GB 2 377 689 A relates to a wheeled dolly having attachment formations formed to allow the dolly to be attached to another dolly having like attachment formations.

US 2017/151974 A1 relates to a connectable dolly having a platform, with a deployable connector for removably connecting two dollies in lateral juxtaposition.

US 2009/085315 A1 relates to a dolly including a deck and a plurality of casters extending downward below the deck.

### Summary of the Invention

The object of the present invention is to provide a pallet, a plurality of such pallets can be easily connected with each other or disconnected from each other.

In order to achieve the above object, the present invention provides a pallet according to claim 1. The pallet has a base which has two pairs of opposing side edges, wherein the base further has a first connecting device and a second connecting device respectively provided at one pair of opposing side edges of the base , wherein
the first connection device comprises:
   a first connecting member being arranged such that the first connecting member is movable between a first position and a second position relative to the base;
the second connecting device comprises:
   a second connecting member;
   a transmission assembly; and
   operating members which are provided at the other pair of opposing side edges of the base, wherein the operating members are connected to the second connecting member via the transmission assembly, and the operating members are arranged to be able to operate the second connecting member, so that the second connecting member is movable between a connected position and a disconnected position,
wherein when two pallets are connected to each other, the first connecting member of one pallet is in the second position, the corresponding second connecting member of the other pallet is in the connected position, and the first connecting member of one pallet and the corresponding second connecting member of the other pallet are connected to each other.

In one embodiment, the middle portion of the side edge of the base where the second connecting device is installed is provided with an opening slot, in which at least a part of the first connecting device of one pallet is located when two pallets are connected to each other.

In one embodiment, the first connecting member is provided with a limiting structure, and the second connecting member is arranged to be cooperated with the limiting structure when two pallets are connected to each other. In one embodiment, the limiting structure is a limiting hole or a limiting slot.

In one embodiment, the first connecting member is arranged to be able to be translated relative to the base. In one embodiment, the first connecting member is further arranged to be able to be rotated relative to the base.

In one embodiment, the first connecting device further comprises a first limiting member connected to the first connecting member and arranged such that when two pallets are connected to each other, one movement direction of one pallet relative to another pallet is limited.

In one embodiment, the first connecting device further comprises a locking member, a locking spring, and a first returning spring, wherein the first connecting member is movably connected to the base via the first returning spring, and the locking member is connected to the locking spring and both are mounted to the first connecting member, so that the locking member is extendable or retractable relative to the first connecting member.

In one embodiment, the first connecting member has a U-shaped structure, both arms of the U-shaped structure are mounted with the first returning spring, and the bottom arm of the U-shaped structure is mounted with a locking spring and two locking members, and the locking member has a locking tongue, an operating portion and a spring mounting portion, wherein two ends of the locking spring are respectively mounted to the spring mounting portions of the two locking members, and the locking tongue extends out of the first connecting member.

In one embodiment, the operating member has a handle and a connecting portion connected to the handle, the connecting portion is connected to the transmission assembly, and the transmission assembly passes through the base.

In the present invention, the transmission assembly has connecting shafts and driving members, wherein one end of each connecting shaft is connected to the associated operating member, the other end of each connecting shaft is connected to one end of the associated driving member, and the other end of each driving member cooperates with the second connecting member to drive the second connecting member to move up and down.

In one embodiment, the transmission assembly further comprises a second returning spring, one end of the second returning spring is connected to the second connecting member, and the other end abuts against the base.

In one embodiment, the other end of the driving member has a driving rod, the second connecting member has a locking tongue and a driving groove, wherein the driving rod cooperates with the driving groove to drive the locking tongue to move up and down.

In one embodiment, the pallet further comprises a wheel assembly, which is mounted on the bottom of the base.

In one embodiment, the pallet further comprises a brake pedal assembly, which is mounted on the lower portion of the other pair of opposing side edges and used to control the braking of the wheel assembly.

The invention provides a connecting device that can be unlocked from the side edge of the pallet, realizes the mutual disconnection of the pallets without unloading the pallet load, and has convenient operation, simple structure and easy maintenance.

### Brief description of the Drawings

Fig. 1 is a perspective view of a pallet according to one embodiment of the present invention.
Fig. 2 is another perspective view of the pallet of Fig. 1 with a part of it cut away to show internal structure.
Fig. 3 is a perspective view of a structure of a first connecting device of the pallet of Fig. 1.
Fig. 4 is a perspective view of a structure of a locking member of the first connecting device of Fig. 3.
Fig. 5 is a cross-sectional view of the first connecting device of Fig. 3.
Fig. 6 is an exploded perspective view of a structure of a second connecting device of the pallet of Fig. 1.
Fig. 7 is a perspective view of a second connecting member of the second connecting device of Fig. 6.
Fig. 8 is a bottom view of the second connecting member of Fig. 7.
Fig. 9 is a perspective view of a driving member of the second connecting device of Fig. 6.
Fig. 10 is a perspective view of an operating member of the second connecting device of Fig. 6.
Fig. 11 is a perspective view of a connecting shaft of the second connecting device of Fig. 6.
Fig. 12 is a perspective view of another connecting shaft of the second connecting device of Fig. 6.
Fig. 13 is a perspective view of the pallet of Fig. 1, in which the second connecting device is in a connected position, and a part of the structure of the base is indicated by a dotted line to show the second connecting device located inside the base.
Fig. 14 is a perspective view of the pallet of Fig. 1, in which the second connecting device is in a disconnected position, and a part of the structure of the base is indicated by a dashed line to show the second connecting device located inside the base.
Fig. 15 is a perspective view of two pallets connected to each other.
Fig. 16 is a cross-sectional view of the two pallets connected to each other.
Fig. 17 is a cross-sectional view of one of the two interconnected pallets.
Fig. 18 is a cross-sectional view of the other of the two interconnected pallets.

### Detailed Description

The preferred embodiments of the present invention will be described in detail below with reference to the accompanying drawings, so that the purposes, features and advantages of the present invention can be more clearly understood. It should be understood that the embodiments shown in the accompanying drawings are not intended to limit the scope of the present invention.

In the following description, for the purpose of illustrating various disclosed embodiments, some specific details are set forth to provide a thorough understanding of various disclosed embodiments. However, those skilled in the relevant art will recognize that the embodiments may be embodied without one or more of these specific details. In other situations, well-known devices, structures, and technologies associated with the present application may not be shown or described in detail to avoid unnecessarily obscuring the description of the embodiments.

Unless the context has other requirement, throughout the specification and claims, the words "comprising" and its variations, such as "including" and "having" should be understood as open and inclusive meanings, that is, should be interpreted as "including, but not limited to".

Throughout the specification, reference to "one embodiment" or "one embodiment" means that a specific feature, structure, or characteristic described in combination with the embodiment is involved in at least one embodiment. Therefore, the appearances of "in one embodiment" or "in one embodiment" in various positions throughout the specification are not all refer to the same embodiment. In addition, specific features, structures, or characteristics may be combined in any manner in one or more embodiments.

As used in this specification and the appended claims, the singular forms "a" and "the" include plural referents unless the context clearly dictates otherwise. It should be noted that the term "or" is usually used in its meaning including "and/or", unless the context clearly stipulates otherwise.

In the following description, in order to clearly demonstrate the structure and working mode of the present invention, many directional words will be used for description, but the words "front", "rear", "left", "right", "outer", "inner" , "outward", "inward", "upper", "lower" and other words should be understood as convenient terms and should not be understood as restrictive terms.

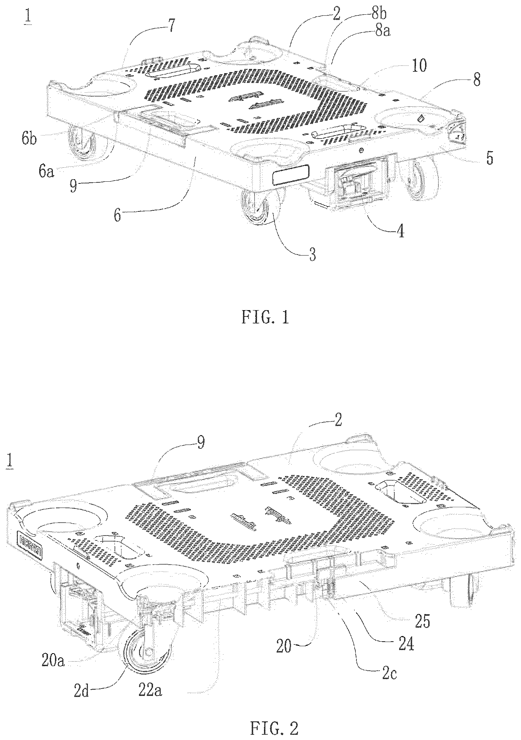

As shown in Figure 1-2, the pallet 1 has a base 2. A wheel assembly 3 is mounted on the bottom of the base 2. The base 2 is also mounted with a brake pedal assembly 4. The brake pedal assembly 4 is used to control the braking of the wheel assembly 3. This type of pallet has the wheel assembly 3, and can be moved easily, so it is usually called a movable pallet.

The base 2 has two pairs of opposing side edges 5, 6, 7, 8. In this embodiment, the brake pedal assembly 4 is mounted at a pair of opposing side edges 5 and 7. A first connecting device 9 and a second connecting device 10 are respectively provided at the opposing side edges 6 8 of the base 2. The first connecting device 9 of one pallet can be connected to the second connecting device 10 of another pallet, thereby connecting the two pallets together. An opening slot 6a is provided in the middle portion of the side edge 6 of the base 2 provided with the first connecting device 9. An opening slot 8a is also provided in the middle portion of the side edge 8 of the base 2 where the second connecting device 10 is provided. When two pallets are connected to each other, at least a part of the first connecting device of one pallet is located in the opening slot 8a.

As shown in FIGS. 1-5, the first connecting device 9 has a first connecting member 11. The first connecting member 11 is connected to the base 2 and is able to move relative to the base 2 between a first position and a second position. When the first connecting member is in the first position, the first connecting device is in a disconnected state. When the first connecting member is in the second position, the first connecting device is in a connected state, that is, connected to another pallet.

The first connecting member 11 is mounted with a locking member 12, a locking spring 13 and a first returning spring 14. The first connecting member 11 is movably connected to the base 2 via a first returning spring 14. Preferably, the first connecting member 11 is arranged to be able to be translated and be rotated relative to the base 2. The locking spring 13 cooperates with the locking member 12 so that the locking member 12 is extendable or retractable relative to the first connecting member 11. Herein, the locking member 12 is used as a first limiting member of the first connecting device, so that when two pallets are connected to each other, the first limiting member limits one direction of movement of one pallet relative to the other pallet, for example, limits the upward movement direction of the pallet. It should be understood that the first limiting member may also has other structures to achieve the same function.

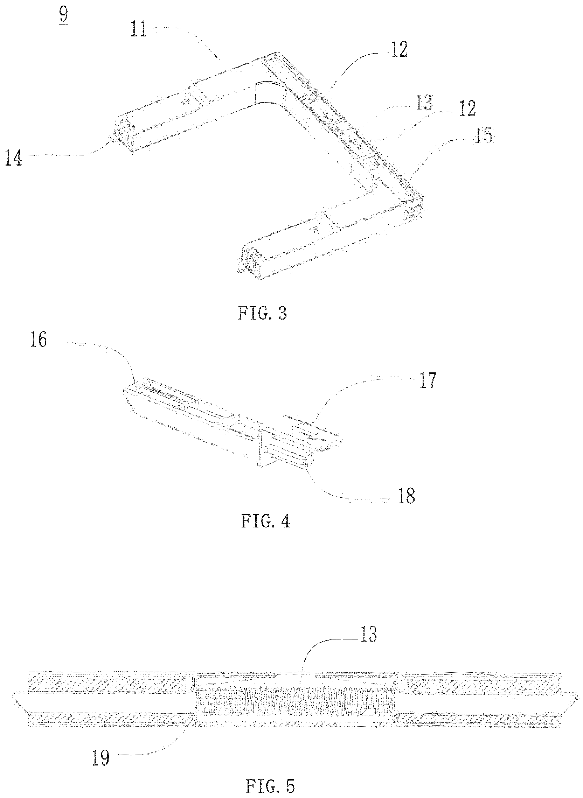

In this embodiment, as shown in FIG. 3, the first connecting member 11 has a U-shaped structure. Both arms of the U-shaped are mounted with the first returning springs 14 respectively. One end of each first returning spring 14 is fixedly connected to the base 2 and the other end is fixedly connected to the first connecting member 11. Both arms of the U-shaped are further provided with limit portions 11a. The limiting portion 11a cooperates with a limiting portion 2f provided on the base to limit the distance that the first connecting member extends out relative to the base 2. A bottom arm of the U-shaped is provided with an opening slot 15. A limiting portion 19 is provided in the opening slot. The opening slot 15 is mounted with the locking spring 13 and two locking members 12, wherein the locking spring 13 is located between the two locking members 12. As shown in FIGS. 4-5, the locking member 12 is an integral member having a locking tongue 16, an operating portion 17 and a spring mounting portion 18. The operating portion 17 is located at one end of the lock tongue 16 and is higher than the lock tongue 16. The spring mounting portion 18 is provided just below the operating portion 17. When assembling, the two ends of the locking spring 13 are respectively mounted on the spring mounting portions 18 of the two locking members 12, and the locking tongue 16 extends out of the first connecting member 11. The operation portion 17 is limited by the limiting portion 19. When assembling the first connecting device to the base 2, the lock tongue can be retracted into the first connecting member 11 via the operating portion 17, and after the lock tongue is placed in position, the operating portion can be loosened to enable the lock tongue 16 to extend out.

Correspondingly, the base 2 is provided with limiting portions 6b on both sides of the opening slot 6a to limit the lock tongue 16 in the disconnected state. The base 2 is provided with limiting portions 8b on both sides of the opening slot 8a to limit the lock tongue 16 in the connected state.

Herein, the bottom arm of the U-shaped first connecting member serves as a limiting structure, and when two pallets are connected to each other, it cooperates with the corresponding connecting structure of the other pallet to keep the two pallets in a connected state. It should be understood that the above-mentioned limiting structure may also be a limiting hole or a limiting slot, as long as it can limit the corresponding connecting structure of another pallet.

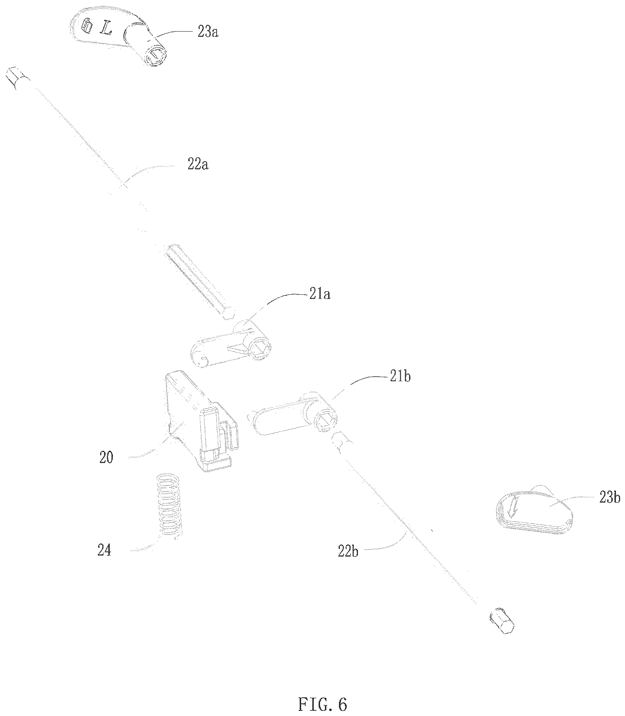

As shown in FIG. 6, the second connecting device 10 has a second connecting member 20. The second connecting member 20 is mounted on the base 2. The second connecting member 20 is connected with driving members 21a, 21b. The driving members 21a and 21b are used to drive the second connecting member 20 to move up and down. The driving member 21a is connected to one end of the connecting shaft 22a. The other end of the connecting shaft 22a passes through the base 2 and is connected to an operating member 23a. The operating member 23a is mounted at the side edge of the base. The driving member 21b is connected to one end of the connecting shaft 22b. The other end of the connecting shaft 22b passes through the base 2 and is connected to the operating member 23b. The operating member 23a and the operating member 23b are respectively mounted at one pair of opposing side edges of the base 2.

Thus, when two interconnected pallets are to be unlocked, only the operating member 23a or 23b is required to be manipulated on the side to achieve unlocking. It takes manipulating the operating member 23a as an example. The operating member 23a drives the connecting shaft 22a to move, the connecting shaft 22a drives the driving member 21a to move, and the driving member 21a drives the second connecting member 20 to move, thereby disconnecting the second connecting member 20 from the first connecting member 11, so that the two pallets can be disconnected.

In this embodiment, the connecting shafts 22a, 22b and the driving members 21a, 21b constitute a transmission assembly for transmitting the motion of the operating members 23a, 23b to the second connecting member 20.

Further, the second connecting member 20 is connected to one end of the second returning spring 24. The other end of the second returning spring 24 abuts against the limiting portion 2c on the base 2. When the second connecting member 20 is driven to move downward by the driving member 21, the second returning spring 24 is compressed, thereby providing a restoring force to the second connecting member 20. When the second connecting member 20 is not driven, the restoring force causes the second connecting member 20 to reset.

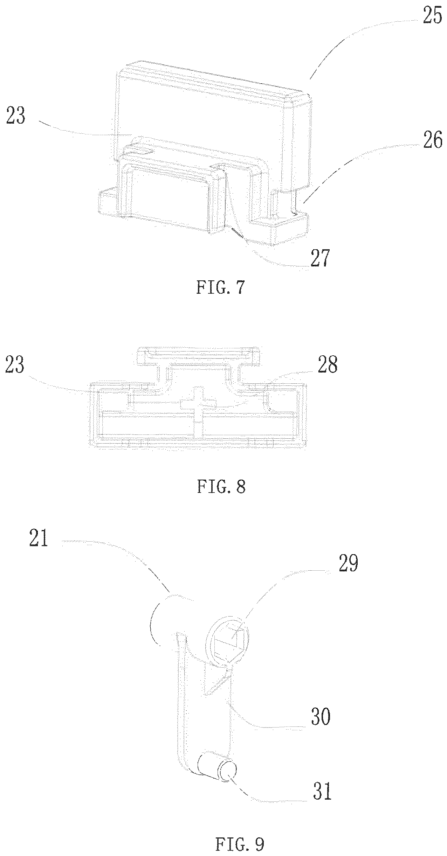

The second connecting member 20 has a locking tongue 25. There is a driving groove 26 below the locking tongue 25. The driving groove 26 cooperates with the driving rod on the driving member to drive the second connecting member 20 to move. A limiting portion 27 is protruding from one side of the tongue 25. The protruding limiting portion 27 is used to prevent the second connecting member 20 from being disconnected from the base 2 after the second connecting member 20 was installed on the base 2. A spring mounting portion 28 is provided under the lock tongue 25 for connecting the second returning spring 24, as shown in Figs. 7-8.

The driving members 21a and 21b have the same structure, and the driving member 21a is taken as an example for description. As shown in FIG. 9, the driving member 21 a has a connecting portion 29. The connecting portion 29 is connected to the connecting shaft 22a. A driving arm 30 extends from the connecting portion 29 perpendicular to the connecting portion 29. The end of the driving arm 30 extends out of a driving rod 31 parallel to the connecting portion 29. The driving rod 31 can extend into the driving groove 26 and cooperate with the driving groove 26 to drive the locking tongue 25 to move up and down.

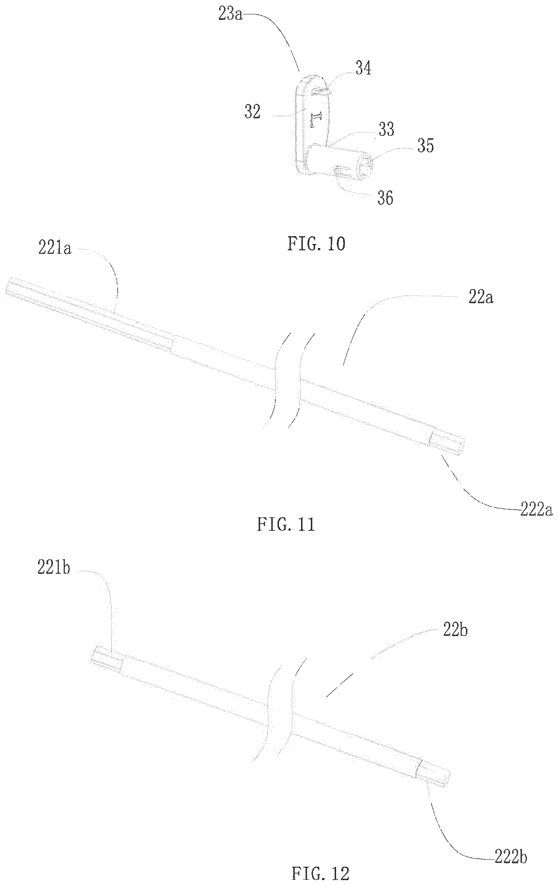

The operating members 23a and 23b have the same structure, and the operating member 23a is taken as an example for description. As shown in FIG. 10, the operating member 23a has a handle 32 and a connecting portion 33 connected to the handle 32. The handle 32 is further provided with a limiting portion 34 on the side facing the base. The limiting portion 34 cooperates with the limiting portion 2d on the base, and is used to rotatably connect the operating member 23a to the base 2 and prevent the operating member 23a from being disconnected from the base. The connecting portion 33 is used to connect the connecting shaft 22a. The connecting portion 33 is provided with an inner hole 35 having a polygonal cross section. One end of the connecting shaft 22a has a correspondingly shaped cross section. The connecting portion 33 is further provided with another limiting portion 36. The limiting portion 36 cooperates with the limiting portion 34 to rotatably hold the operating member 23a at the side edge of the base.

As shown in FIGS.11-12, the structure of the connecting shaft 22a and the connecting shaft 22b are substantially the same. Both ends of the connecting shaft 22a and the connecting shaft 22b are provided with connecting segments 221 and 222 having a polygonal cross section. The difference between the connecting shaft 22a and the connecting shaft 22b is the length of the connecting segment. The connecting segment at one end of the connecting shaft 22a is longer so as to pass through the driving member 21a and extend into a part of the driving member 21b.

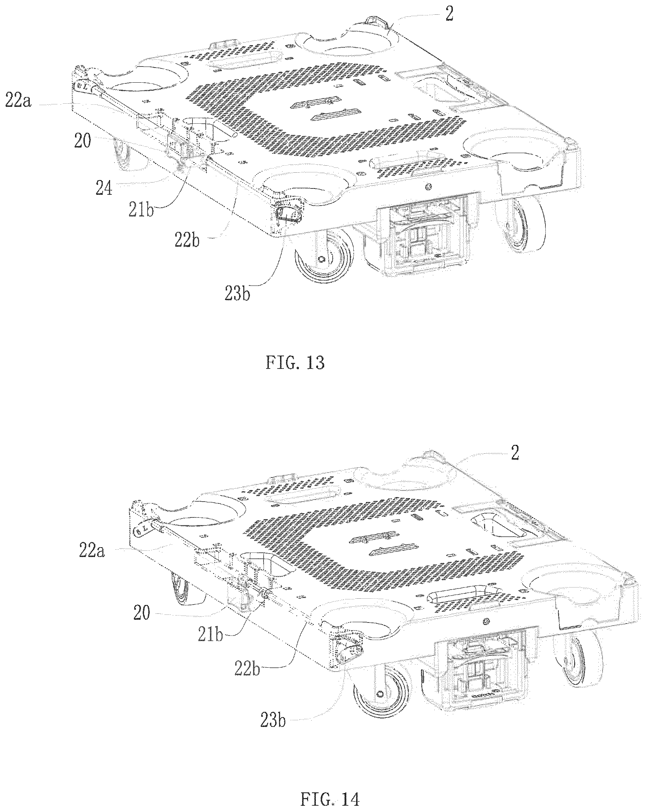

As shown in FIGS. 13-14, after assembly, the first connecting member 11 of the first connecting device 9 is installed in the opening slot 6a of the base. The first connecting member 11 can be pulled out relative to the base 2. The second connecting member 20 of the second connecting device 10 is located in the opening slot 8a of the base 2. The operating members 23a and 23b are located at the side edges 5 and 7, respectively. Rotating the operating member 23a or 23b can make the locking tongue of the second connecting member 20 move up and down to extend out or retract. When the locking tongue of the second connecting member 20 extends out, as shown in FIG. 13, the pallet is in a connectable state. When the locking tongue of the second connecting member 20 is retracted, as shown in FIG. 14, the pallet is in a detachable state.

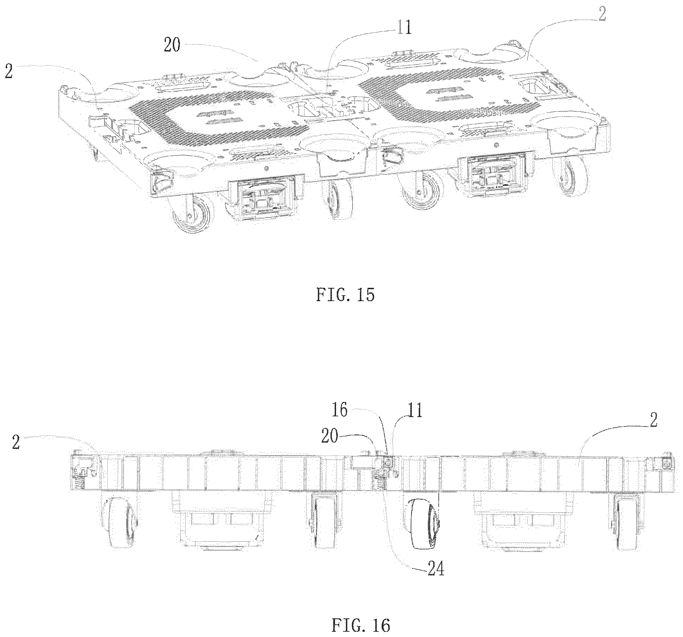

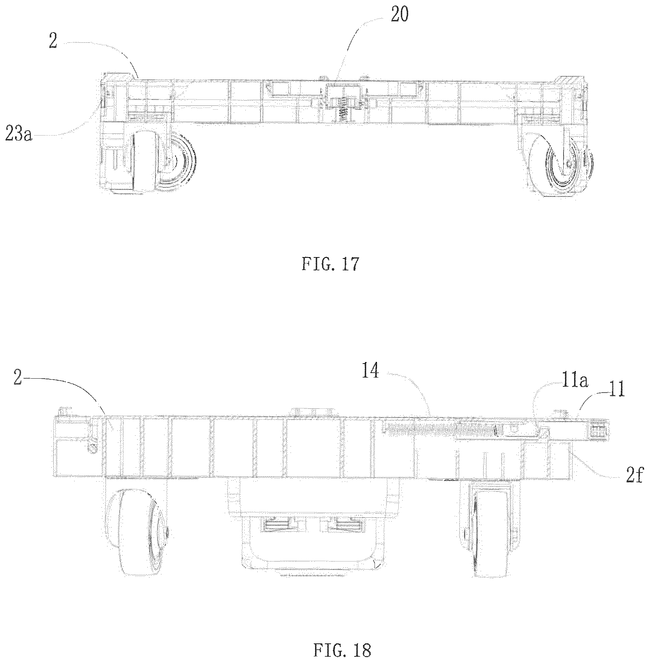

As shown in FIGS. 15-18, when the two pallets are connected to each other, the first connecting member 11 of the first pallet extends out relative to its base and extends beyond the side edge of the base to enter the opening slot of the other pallet and cooperate with the second connecting member 20 of the other pallet to limit the relative movement of the two pallets in the horizontal direction. At the same time, the locking member 12 on the first connecting member of the first pallet is limited by the other pallet to limit the relative movement of the two pallets in the vertical direction.

When the two pallets in the connected states are to be disconnected, only the operating member 23a or 23b is necessary to be manipulated, so that the locking tongue of the second connecting member 20 can move downward to disconnect from the first connecting member 11. The first connecting member 11 is retracted to the first pallet under the action of its returning spring 14. Thus, the two pallets are disconnected.

The pallet of the present application can realize the mutual connection between two or more pallets with the connecting device, so that the multiple pallets can move synchronously. When the interconnected pallets are moved to the destination, the operating members on the side edges of the base are operated to be unlocked, so that the connected pallets can be unlocked without unloading the goods carried on the pallets. The connecting device of the present application is particularly suitable for pallets that need to move quickly and require high operating convenience.

The preferred embodiments of the present invention have been described in detail above, but it should be understood that, if necessary, aspects of the embodiments can be modified to adopt aspects, features, and concepts of various patents, applications, and publications to provide additional embodiments.

Considering the detailed description above, these and other changes can be made to the embodiments, the invention being defined by the appended claims.

## Claims

1. A pallet (1) having a base (2) which has two pairs of opposing side edges (5, 6, 7, 8), wherein the base (2) further has a first connecting device (9) and a second connecting device (10) respectively provided at one pair of opposing side edges (6, 8) of the base (2), wherein
the first connection device (9) comprises:
a first connecting member (11) being arranged such that the first connecting member (11) is movable between a first position and a second position relative to the base (2);
the second connecting device (10) comprises:
a second connecting member (20);
a transmission assembly (22a, 22b, 21a, 21b); and
operating members (23a, 23b) which are provided at the other pair of opposing side edges (5, 7) of the base (2), wherein the operating members are connected to the second connecting member (20) via the transmission assembly, and the operating members are arranged to be able to operate the second connecting member (20), so that the second connecting member (20) is movable between a connected position and a disconnected position,
wherein when two pallets (1) are connected to each other, the first connecting member (11) of one pallet (1) is in the second position, the corresponding second connecting member (20) of the other pallet (1) is in the connected position, and the first connecting member (9) of one pallet (1) and the corresponding second connecting member (20) of the other pallet (1) are connected to each other, wherein
the transmission assembly has connecting shafts (22a, 22b) and driving members (21a, 21b), wherein one end of each connecting shaft (22a, 22b) is connected to the associated operating member (23a, 23b), the other end of each connecting shaft (22a, 22b) is connected to one end of the associated driving member (21a, 21b), and the other end of each driving member (21a, 21b) cooperates with the second connecting member (20) to drive the second connecting member (20) to move up and down.

2. A pallet according to claim 1, **characterized in that** the first connecting device (9) further comprises a locking member (12), a locking spring (13), and a first returning spring (14), wherein the first connecting member (11) is movably connected to the base via the first returning spring (14), and the locking member (12) is connected to the locking spring (13) and both are mounted to the first connecting member (11), so that the locking member (12) is extendable or retractable relative to the first connecting member (11).

3. A pallet according to claim 2, **characterized in that** the first connecting member (11) has a U-shaped structure, both arms of the U-shaped structure are mounted with the first returning spring (14), and the bottom arm of the U-shaped structure is mounted with the locking spring (13) and two locking members (12), and each locking member (12) has a locking tongue (16), an operating portion (17) and a spring mounting portion (18), wherein two ends of the locking spring (13) are respectively mounted to the spring mounting portions (18) of the two locking members, and the locking tongue (16) extends out of the first connecting member (9).

4. A pallet according to claim 1, **characterized in that** each operating member (23a, 23b) has a handle (32) and a connecting portion (33) connected to the handle (32), the connecting portion (33) is connected to the transmission assembly, and the transmission assembly passes through the base (1).

5. A pallet according to claim 1, **characterized in that** the other end of each driving member (21a, 21b) has a driving rod (31), the second connecting member (20) has a locking tongue (25) and a driving groove (26), wherein the driving rod (31) cooperates with the driving groove (26) to drive the locking tongue (25) to move up and down.

6. A pallet according to claim 1, **characterized in that** the pallet (1) further comprises a wheel assembly (3) mounted on the bottom of the base (1).

7. A pallet according to claim 1, **characterized in that** the middle portion of the side edge of the base where the second connecting device (10) is installed is provided with an opening slot (6a), in which at least a part of the first connecting device (9) of one pallet (1) is located when two pallets (1) are connected to each other.

8. A pallet according to claim 1, **characterized in that** the transmission assembly further comprises a second returning spring (24), wherein one end of the second returning spring (24) is connected to the second connecting member (20), and the other end abuts against the base (2).

9. A pallet according to claim 6, **characterized in that** the pallet further comprises a brake pedal assembly (4), which is mounted on the lower portion of the other pair of opposing side edges (5, 7) and used to control the braking of the wheel assembly (3).

## Patentansprüche

1. Eine Palette (1) mit einer Grundfläche (2), die zwei Paare gegenüberliegender Seitenkanten (5, 6, 7, 8) aufweist, wobei die Grundfläche (2) weiter eine erste Verbindungsvorrichtung (9) und eine zweite Verbindungsvorrichtung (10) aufweist, die jeweils an einem Paar der gegenüberliegenden Seitenkanten (6, 8) der Grundfläche (2) vorgesehen sind, wobei
die erste Verbindungsvorrichtung (9) Folgendes umfasst:
ein erstes Verbindungselement (11), das so angeordnet ist, dass das erste Verbindungselement (11) zwischen einer ersten Position und einer zweiten Position mit bezug auf die Grundfläche (2) bewegbar ist,
die zweite Verbindungsvorrichtung (10) Folgendes umfasst:
ein zweites Verbindungselement (20)
eine Übertragungsgruppe (22a, 22b, 21a, 21b); und
Bedienungselemente (23a, 23b), die am anderen Paar der gegenüberliegenden Kanten (5, 7) der Grundfläche (2) vorgesehen sind, wobei die Bedienungselemente über die Übertragungsgruppe an das zweite Verbindungselement (20) angeschlossen sind, und die Bedienungselemente so angeordnet sind, dss sie fähig sind, das zweite Verbindungselement (20) zu bedienen, so dass das zweite Verbindungselement (20) zwischen einer angeschlossenen Position und einer nicht angeschlossenen Posicion bewegt werden kann,
wobei, wenn zwei Paletten (1) miteinander verbunden sind, das erste Verbindungselement (11) einer Palette (1) sich in der zweiten Position befindet, das entsprechende zweite Verbindungselement (20) der anderen Palette (1) sich in der angeschlossenen Position befindet und das erste Verbindungselement (9) einer Palette (1) und das entsprechende zweite Verbindungselement (20) der anderen Palette (1) miteinander verbunden sind, wobei
die Übertragungsgruppe Anschlussschäfte /22a, 22b) und Antriebsglieder (21a, 21b) aufweist, wobei ein Ende eines jeden Anschlussschaftes /22a, 22b) an das zugehörige Bedienungselement (23a, 23b) angeschlossen ist und das andere Ende eines jeden Anschlussschaftes (22a, 22b) an ein Ende des dazugehörenden Antriebsglied (21a, 21b) angeschlossen ist, und das andere Ende eines jeden Antriebsgliedes (21a, 21b) mit dem zweiten Verbindungselement (20) kooperiert, um das zweite Antriebsglied (20) zur Auf- und Abbewegung anzutreiben.

2. Eine Palette gemäss Anspruch 1, **dadurch gekennzeichnet, dass** die erste Verbindungsvorrichtung (9) weiter ein Sperrglied (12), eine Verriegelungsfeder (13) und eine erste Rückstellfeder (14) umfasst, wobei das erste Verbindungselement (11) beweglich an die Grundfläche über die erste Rückstellfeder (14) angeschlossen ist und das Sperrglied (12) mit der Verriegelungsfeder (13) verbunden ist und beide am ersten Verbindungselement (11) montiert sind, so dass das Sperrglied (12) mit Bezug auf das erste Verbindungselement (11) ausziehbar oder einziehbar

3. Eine Palette gemäss Anspruch 2, **dadurch gekennzeichnet, dass** das erste Verbindungselement (11) eine U-förmige Struktur aufweist, beide Arme der U-förmigen Struktur zusammen mit der ersten Rückstellfeder (14) montiert sind und der untere Arm der U-förmigen Struktur zusammen mit der Verriegelungsfeder (13) und zwei Verriegelungsgliedern (12) montiert ist, und jedes Sperrglied (12) eine Sperrzunge (16), einen Bedienungsteil (17) und einen Federmontageteil (18) aufweist, wobei zwei Enden der Verriegelungsfeder (13) jeweils am Federmontageteil (18) der zwei Sperrglieder montiert sind, und die Sperrzunge (16) sich aus der ersten Verbindungsvorrichtung (9) erstreckt.

4. Eine Palette gemäss Anspruch 1, **dadurch gekennzeichnet, dass** jedes Bedienungselement (23a, 23b) einen Griff (32) und einen Anschlussteil (33) aufweist, der am Griff (32) angeschlossen ist, der Anschlussteil (33) an die Übertragungsgruppe angeschlossen ist und die Übertragungsgruppe durch die Grundfläche (1) geht.

5. Eine Palette gemäss Anspruch 1, **dadurch gekennzeichnet, dass** das andere Ende eines jeden Antriebgliedes (21a, 21b) eine Treibstange (31) aufweist, das zweite Antriebsglied (20) eine Sperrzunge (25) und eine Antriebsnut /26) aufweist, wobei die Triebstange (31) mit der Antriebsnut (26) kooperiert, um die Sperrzunge (25) zu einer Auf- und Abwegegung anzutreiben.

6. Eine Palette gemäss Anspruch 1, **dadurch gekennzeichnet, dass** die Palette (1) weiter eine Rädergruppe (3) aufweist, die am Boden der Grundfläche (1) montiert ist.

7. Eine Palette gemäss Anspruch 1, **dadurch gekennzeichnet, dass** der mittlere Teil der Seitenkante der Grundfläche, wo die zweite Verbindungsvorrichtung (10) installiert ist, mit einem Öffnungsspalt (6a) versehen ist, in dem sich mindestens ein Teil der ersten Verbindungsvorrichtung (9) eines Pallets (1) befindet, wenn zwei Palleten (1) aneinander angeschlossen sind.

8. Eine Palette gemäss Anspruch 1, **dadurch gekennzeichnet, dass** die Übertragungsgruppe weiter eine zweite Rückstellfeder (24) umfasst, wobei ein Ende der zweiten Rückstelleder (14) an das zweite Verbindungselement (20) angeschlossen ist und das andere Ende gegen die Grundfläche (2) anstösst.

9. Eine Palette gemäss Anspruch 6, **dadurch gekennzeichnet, dass** die Palette weiter eine Bremspedalgruppe (4) umfasst, die am Unterteil des anderen Paares gegenüberliegender Seitenkanten (5,7) montiert ist und verwendet wird, um den Bremsvorgang der Rädergruppe (3) zu steuern.

## Revendications

1. Une palette (1) comprenant une base (2) avec deux paires de bords latéraux opposés (5, 6, 7, 8), dans laquelle la base (2) comprend en outre un premier dispositif de connexion (9) et un second dispositif de connexion (10) respectivement prévus sur une paire de bords latéraux opposés (6, 8) de la base (2), et dans laquelle le premier dispositif de connexion (9) comprend :
un premier élément de connexion (11) disposé de manière à ce que le premier élément de connexion (11) puisse être déplacé entre une première position et une deuxième position par rapport à la base (2) ;
le deuxième dispositif de connexion (10) comprend :
un deuxième élément de connexion (20) ;
un ensemble de transmission (22a, 22b, 21a, 21b) ; et
des éléments d'actionnement (23a, 23b) prévus sur l'autre paire de bords latéraux opposés (5, 7) de la base (2), les éléments d'actionnement étant reliés au deuxième élément de connexion (20) par l'intermédiaire de l'ensemble de transmission, et les éléments d'actionnement étant disposés de manière à pouvoir actionner le deuxième élément de connexion (20), de sorte que le deuxième élément de liaison (20) puisse passer d'une position connectée à une position déconnectée,
dans lequel, lorsque deux palettes (1) sont reliées l'une à l'autre, le premier élément de connexion (11) d'une palette (1) est dans la deuxième position, le deuxième élément de connexion (20) correspondant de l'autre palette (1) est dans la position connectée, et le premier élément de connexion (9) d'une palette (1) et le deuxième élément de connexion (20) correspondant de l'autre palette (1) sont connectés l'un à l'autre, et où
l'ensemble de transmission comporte des arbres de connexion (22a, 22b) et des éléments d'entraînement (21a, 21b), une extrémité de chaque arbre de connexion (22a, 22b) étant reliée à l'élément de commande associé (232a, 232b), l'autre extrémité de chaque arbre de connexion (22a, 22b) étant reliée à une extrémité de l'élément d'entraînement associé (21a, 21b), et l'autre extrémité de chaque élément d'entraînement (21a, 21b) interagit avec le deuxième élément de connexion (20) pour entraîner le deuxième élément de connexion (20) à se déplacer dans un mouvement ascendante et descendante..

2. Palette selon la revendication 1, **caractérisée en ce que** le premier dispositif de connexion (9) comprend en outre un élément de verrouillage (12), un ressort de verrouillage (13) et un premier ressort de retour (14), dans lequel le premier élément de connexion (11) est relié de manière mobile à la base par l'intermédiaire du premier ressort de retour (14), et l'élément de verrouillage (12) est relié au ressort de verrouillage (13) et tous deux sont attachés au premier élément de connexion (11), de sorte que l'élément de verrouillage (12) puisse être étendu ou rétracté par rapport au premier élément de connexion (11).

3. Palette selon la revendication 2, **caractérisée en ce que** le premier élément de connexion (11) a une structure en forme de U, les deux bras de la structure en forme de U étant montés avec le premier ressort de retour (14), et le bras inférieur de la structure en forme de U étant monté avec le ressort de verrouillage (13) et les deux éléments de verrouillage (12), et chaque élément de verrouillage (12) comprend une languette de verrouillage (16), un élément d'actionnement (17) et un élément de montage du ressort (18), dans lequel les deux extrémités du ressort de verrouillage (13) sont respectivement montées sur les éléments de montage du ressort (18) des deux éléments de verrouillage, et la languette de verrouillage (16) s'étend hors du premier élément de connexion (9).

4. Palette selon la revendication 1, **caractérisée en ce que** chacun des éléments d'actionnement (23a, 23b) comprend une poignée (32) et une portion de connexion (33) reliée à la poignée (32), où la portion de connexion (33) est reliée à l'ensemble de transmission, et où l'ensemble de transmission passe à travers la base (1).

5. Palette selon la revendication 1, **caractérisée en ce que** l'autre extrémité de chaque élément d'entraînement (21a, 21b) a une tige d'entraînement (31), le deuxième élément de liaison (20) a une languette de verrouillage (25) et une rainure d'entraînement (26), dans laquelle la tige d'entraînement (31) coopère avec la rainure d'entraînement (26) pour amener la languette de verrouillage (25) à se déplacer dans un mouvement ascendante et descendante.

6. Palette selon la revendication 1, **caractérisée en ce que** la palette (1) comprend en outre un ensemble de roues (3) monté sur la partie inférieure de la base (1).

7. Palette selon la revendication 1, **caractérisée en ce que** la partie centrale du bord latéral de la base où le second dispositif de connexion (10) est installé, est pourvue d'une fente d'ouverture (6a), dans laquelle au moins une partie du premier dispositif de connexion (9) d'une palette (1) est logée lorsque deux palettes (1) sont connectées l'une à l'autre.

8. Palette selon la revendication 1, **caractérisée en ce que** l'ensemble de transmission comprend en outre un deuxième ressort de retour (24), dans lequel une extrémité du second ressort de retour (24) est reliée au deuxième élément de connexion (20), et l'autre extrémité vient en butée contre la base (2).

9. Palette selon la revendication 6, **caractérisée en ce que** la palette comprend en outre un ensemble de pédale de frein (4), qui est monté sur la partie inférieure de l'autre paire de bords latéraux opposés (5, 7) et qui est utilisé pour commander le freinage de l'ensemble de roues (3).
